# FASCICULE DE BREVET EUROPEEN

(11) **EP 2 743 781 B1**
(45) Date de publication et mention de la délivrance du brevet: **12.06.2019**
(21) Numéro de dépôt: 13193502.5
(22) Date de dépôt: 19.11.2013
(51) Int. Cl.: G04B 13/02

(54) **Dispositif d'assemblage par verrouillage d'un emboîtement**
Montagevorrichtung zum Verriegeln eines Verbundsystems
Device for assembly by locking a joint

(30) Priorité: 11.12.2012 EP 12196575
(43) Date de publication de la demande: 18.06.2014
(73) Titulaire: Nivarox-FAR S.A., 2400 Le Locle (CH)
(72) Inventeur: Cusin, Pierre, 1423 Villars-Burquin (CH); Stranczl, Marc, 1260 Nyon (CH); Mallet, Daniel, 25500 Le Bélieu (FR); Graf, Emmanuel, 2400 Le Locle (CH)
(74) Mandataire: Goulette, Ludivine

(56) Documents cités:
- EP-A1- 1 850 193
- EP-A1- 2 273 322
- EP-A1- 2 442 189
- CH-A2- 704 386

## Description

### Domaine de l'invention

L'invention se rapporte à un système d'assemblage d'une pièce dont le matériau ne comporte pas de domaine plastique utilisable (c'est-à-dire avec un domaine plastique très restreint) avec un organe comportant un autre type de matériau.

### Arrière-plan de l'invention

Les assemblages actuels comportant une pièce à base de silicium sont généralement solidarisés par collage. Une telle opération nécessite une extrême finesse d'application ce qui la rend coûteuse.

Le document EP 1 850 193 divulgue une première pièce faite à base de silicium qui est assemblée sur un axe en métal à l'aide d'une pièce intermédiaire métallique. Toutefois, les variantes de forme proposées dans ce document ne sont pas satisfaisantes et, soit, entraînent le bris de la pièce à base de silicium lors de son assemblage, soit, solidarisent insuffisamment les pièces entre elles.

Les documents EP 2 273 322, CH 704 386 et EP 2 442 189 proposent d'autres variantes d'assemblages de pièces à base de silicium.

### Résumé de l'invention

Le but de la présente invention est de pallier tout ou partie les inconvénients cités précédemment en proposant un assemblage sans colle capable de solidariser une pièce dont le matériau ne comporte pas ou peu de domaine plastique utilisable avec un organe comportant un matériau ductile comme, par exemple, un métal ou un alliage métallique.

A cet effet, l'invention se rapporte à un système d'assemblage d'un organe en un premier matériau dans l'ouverture d'une pièce en un deuxième matériau ne comportant pas ou peu de domaine plastique utilisable à l'aide d'une partie intermédiaire en un troisième matériau montée entre ledit organe et ladite pièce, la partie intermédiaire étant agencée pour être reçue contre une portée de la pièce et pour être bloquée latéralement de manière élastique par au moins un dispositif élastique de verrouillage de la pièce afin de rendre solidaire l'ensemble organe - partie intermédiaire - pièce, caractérisé en ce que chaque dispositif élastique de verrouillage comporte un bras monté en porte-à-faux d'une base solidaire de la portée de la pièce et en ce que la partie intermédiaire (7, 27, 47, 67, 87) comporte, sur son diamètre intérieur, au moins un plot et, sur son diamètre extérieur, au moins un bec, chaque dit bec étant situé sur le même rayon qu'un dit plot, pour permettre, à chaque dispositif élastique de verrouillage, de verrouiller élastiquement un dit bec de la partie intermédiaire contre le bras de la pièce par la poussée latérale d'un dit plot de la partie intermédiaire par l'organe.

Cette configuration permet avantageusement de solidariser l'ensemble pièce - partie intermédiaire - organe sans collage avec un organe habituel à la précision maîtrisée tout en garantissant que la pièce ne subisse pas d'efforts destructifs même si elle est formée, par exemple, à partir de silicium.

Conformément à d'autres caractéristiques avantageuses de l'invention :
- selon un premier mode de réalisation, le bras de chaque dispositif élastique de verrouillage comporte une lame fléchie élastiquement par la partie intermédiaire, la lame formant un jour qui coopère avec le bec de la partie intermédiaire afin de solidariser la partie intermédiaire contre la pièce ;
- le jour est formé par une extrémité libre de chaque bras faisant face à une autre base en formant une mortaise permettant de coopérer avec un bec formant tenon de la partie intermédiaire ;
- le jour est formé par un évidement dans chaque bras en formant une mortaise permettant de coopérer avec un bec formant tenon de la partie intermédiaire ;
- la pièce comporte trois dispositifs élastiques de verrouillage ;
- l'organe comporte un axe prolongé par un épaulement permettant de bloquer axialement la pièce et la partie intermédiaire contre l'organe ;
- l'ouverture de la pièce comporte une section dont la largeur maximale est comprise entre 0,2 mm et 2 mm ;
- l'ouverture de la pièce comporte une section circulaire, polygonale ou asymétrique ;
- le deuxième matériau est à base de silicium ;
- le troisième matériau est formé à base d'un métal ou d'un alliage métallique.

De plus, l'invention se rapporte à une pièce d'horlogerie caractérisée en ce qu'elle comporte au moins un système d'assemblage selon l'une des variantes précédentes, la pièce ne comportant pas de domaine plastique pouvant être une roue, une ancre ou un spiral.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en éclatée d'un système d'assemblage selon l'invention ;
- la figure 2 est une vue en perspective d'un système d'assemblage monté selon l'invention ;
- les figures 3 et 4 sont des vues partielles en perspective d'une pièce selon l'invention ;
- la figure 5 est une vue schématique partielle d'un mouvement horloger comportant trois systèmes d'assemblage selon l'invention ;
- la figure 6 est une vue schématique partielle d'un spiral horloger comportant un système d'assemblage selon l'invention.

### Description détaillée des modes de réalisation préférés

Comme expliqué ci-dessus, l'invention se rapporte à un système d'assemblage destiné à solidariser un matériau fragile, c'est-à-dire ne comportant pas de domaine plastique (ou avec un domaine plastique très restreint) comme un matériau à base de silicium, avec un matériau ductile comme un métal ou un alliage métallique.

Ce système d'assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium tel que le quartz, le silicium cristallin, le carbure de silicium, le nitrure de silicium ou l'oxyde de silicium, à base de corindon ou plus généralement à base de céramiques. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas ou peu de domaine plastique utilisable. En effet, lors de tests effectués, le chassage d'un axe en acier est impossible et brise systématiquement les pièces fragiles, c'est-à-dire ne comportant pas ou peu de domaine plastique utilisable. Par exemple, il est apparu que le cisaillement généré par l'entrée de l'axe métallique dans l'ouverture d'une pièce en silicium brise systématique cette dernière.

C'est pourquoi, l'invention se rapporte à un système d'assemblage 1 d'un organe 3 en un premier matériau dans l'ouverture 4 d'une pièce 5 en un deuxième matériau ne comportant pas ou peu de domaine plastique utilisable à l'aide d'une partie intermédiaire 7 en un troisième matériau montée entre l'organe 3 et la pièce 5.

Selon l'invention, la partie intermédiaire 7 est reçue contre une portée 11 de la pièce 5 et est bloquée latéralement de manière élastique par au moins un dispositif élastique de verrouillage 15 afin de rendre solidaire l'ensemble organe 3 - partie intermédiaire 7 - pièce 5.

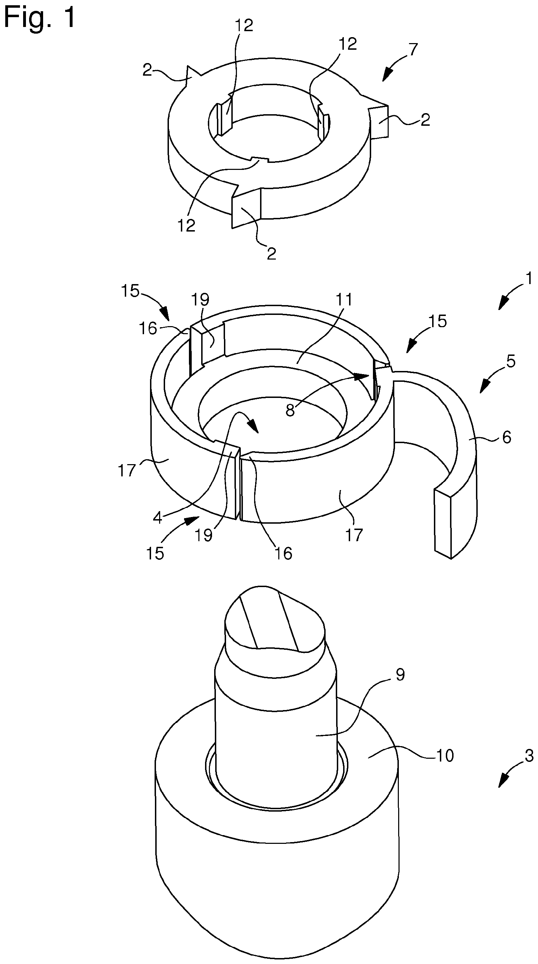

Comme illustré à la figure 1, la partie intermédiaire 7 est généralement annulaire. La partie intermédiaire 7 comporte, sur son diamètre intérieur, au moins un plot 12 permettant de chasser l'organe 3 sur la partie intermédiaire 7. De plus, la partie intermédiaire 7 comporte, sur son diamètre extérieur, au moins un bec 2 (trois becs 2 à la figure 1) associé à un dispositif élastique de verrouillage 15, qui permet de coopérer avec un jour 8 (expliqué ci-dessous) de la pièce 5. Enfin, préférentiellement, chaque plot 12 est situé sur le même rayon qu'un bec 2 par rapport à la surface généralement annulaire.

A la figure 1, on peut voir un organe 3 selon l'invention. L'organe 3 comporte un axe 9 prolongé par un épaulement 10 permettant de bloquer axialement la pièce 5 et la partie intermédiaire 7 contre l'organe 3. Préférentiellement, la section de l'axe 9 est inférieure à celle de l'ouverture 4 afin que la pièce 5 puisse y coulisser sans frottement gras.

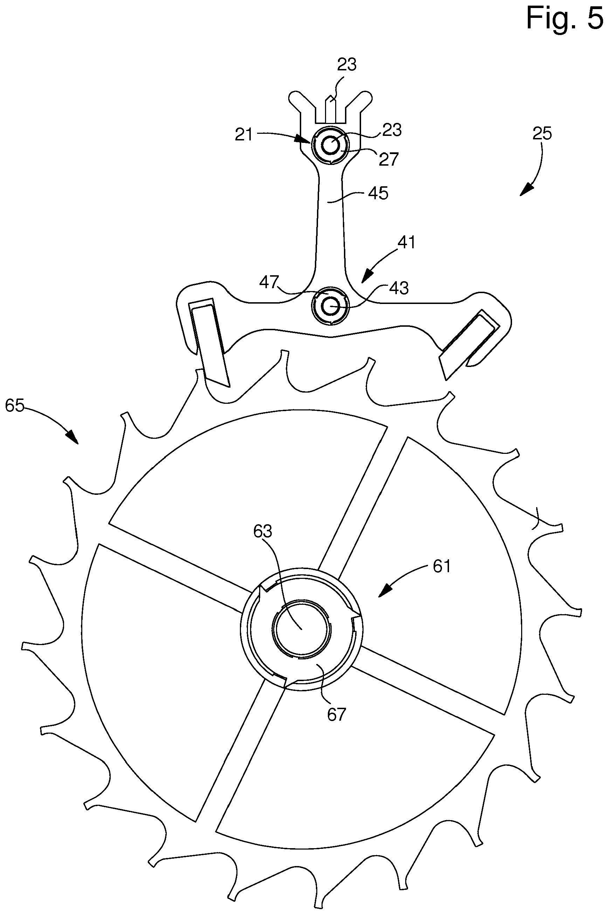

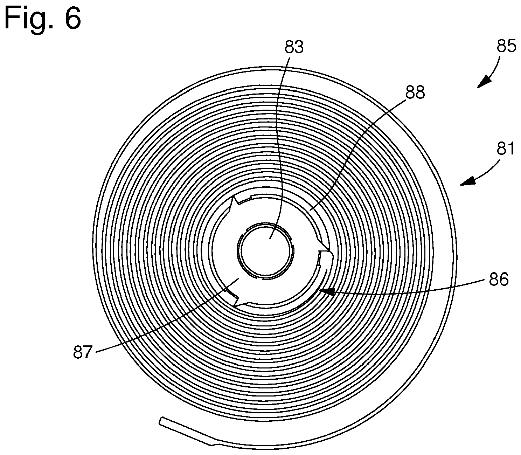

Comme illustré aux figures 1 à 4, la pièce 5 en un deuxième matériau ne comportant pas ou peu de domaine plastique utilisable est représentée sous forme annulaire avec une extension 6. Toutefois, comme illustré aux figures 5 et 6, cette forme n'est qu'une partie de la pièce 5 destinée à expliquer le système d'assemblage 1. Comme illustré aux figures 1 à 4, la pièce 5 comporte une ouverture 4 sensiblement circulaire. Préférentiellement, l'ouverture 4 de la pièce 5 comporte une section dont la largeur maximale est comprise entre 0,2 mm et 2 mm.

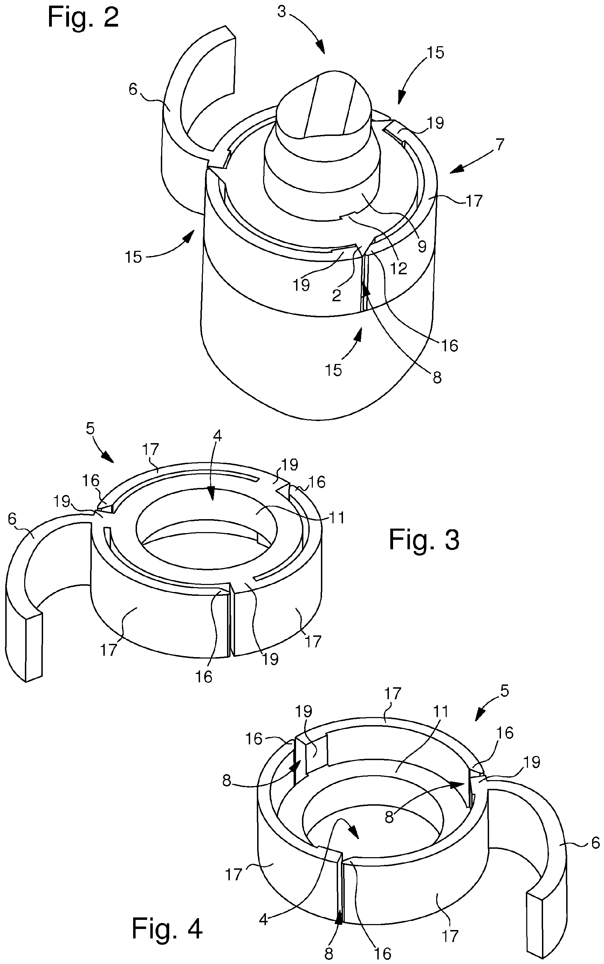

Avantageusement selon l'invention, chaque dispositif élastique de verrouillage 15 comporte un bras 17 monté en porte-à-faux d'une base 19 solidaire de la portée 11 de la pièce 5. Comme visible notamment aux figures 3 et 4, la pièce 5 comporte préférentiellement trois dispositifs élastiques de verrouillage 15.

Il est visible à ces mêmes figures que les bras 17, les bases 19 et l'extension 6 s'étendent selon toute la hauteur de la pièce 5 alors que la portée 11 ne s'étend que sur une partie de sa hauteur et forme l'ouverture 4. De plus, chaque bras 17 comporte une extrémité libre 16 faisant face à une base 19 en laissant un jour 8 de forme préférentiellement correspondante à celle des becs 2 de la partie intermédiaire 7.

Dans l'exemple des figures 1 à 4, chaque jour 8 est formé par une extrémité libre 16 et une base 19. Bien entendu, le jour 8 peut également être formé uniquement par un évidement d'une extrémité libre 16 ou même par un évidement formé à un autre endroit du bras 17.

Dans l'exemple illustré à la figure 2 dans lequel les trois dispositifs élastiques de verrouillage 15 sont montés, le bras 17 de chaque dispositif élastique de verrouillage 15 comporte une lame fléchie élastiquement par la partie intermédiaire 7 et dont l'extrémité libre 16 coopère avec une portion de géométrie correspondante formée sur le diamètre extérieur de la partie intermédiaire 7 afin de solidariser la partie intermédiaire 7 contre la pièce 5.

En effet, dans un premier temps, la partie intermédiaire 7 est montée à jeu en recouvrement partiel de la pièce 5 notamment contre la portée 11, c'est-à-dire qu'aucun frottement gras n'est présent lors du montage de la partie intermédiaire 7 contre la pièce 5. Préférentiellement, chaque bec 2 de la partie intermédiaire 7 est placé en face d'un jour 8 de la pièce 5.

Puis, dans un deuxième temps, l'organe 3 est chassé contre les plots 12 de la partie intermédiaire 7. Lors de ce deuxième temps, le passage de l'axe 9 de l'organe 3 va pousser latéralement lesdits au moins un plot 12 et, étant sur le même rayon, chaque bec 2. Chaque bec 2 va ainsi se rapprocher d'un jour 8 formé entre les extrémités libres 16 et les bases 19 puis pousser l'extrémité libre de chaque bras 17 associé jusqu'à être verrouillé, c'est-à-dire rendre solidaire l'ensemble organe 3 - partie intermédiaire 7 - pièce 5. Les bras 17 étant montés en porte-à-faux, on comprend que ce verrouillage est élastique par déplacement latéral des bras 17.

Dans l'exemple illustré à la figure 2, on comprend donc que chaque dispositif élastique de verrouillage 15 comporte une extrémité libre 16 formant une mortaise qui coopère avec un bec 2 formant tenon réalisé sur le diamètre extérieur de la partie intermédiaire 7. Bien évidemment, d'autres formes et/ou d'autres types d'emboîtements et/ou un emboîtement inversé et/ou des emboîtements différents alternés peuvent être envisagés sans que les effets techniques soient perdus. A titre d'exemple, un des dispositifs élastique de verrouillage 15 pourrait, au contraire des autres, comporter un tenon formé sur l'extrémité libre d'un bras et qui coopère avec une mortaise formée sur le diamètre extérieur de la partie intermédiaire.

Par conséquent, une fois les trois dispositifs élastiques de verrouillage 15 activés, l'organe 3, la partie intermédiaire 7 et pièce 5 forment un ensemble solidaire.

Les figures 5 et 6 montrent des exemples d'applications dans le domaine de l'horlogerie. Dans le cas de la figure 5, l'ancre 25, à titre d'exemple, comporte deux systèmes d'assemblages 21, 41 selon l'invention destinés respectivement à solidariser le dard 23 et l'axe de pivotement 43, avec sa baguette 45.

Comme visible à la figure 5, chaque système d'assemblage 21, 41 comporte une partie intermédiaire 27, 47 coopérant entre le dard 23 ou l'axe 43 et la baguette 45 de l'ancre 25. On comprend donc que chaque système d'assemblage 21, 41 est suffisamment résistant pour ne pas générer de mouvements relatifs entre ses constituants.

La roue d'échappement, et plus généralement la roue 65, comporte, à titre d'exemple, un système d'assemblage 61 destiné à solidariser un axe de pivotement 63, avec la roue 65. Comme visible à la figure 5, le système d'assemblage 61 comporte une partie intermédiaire 67 coopérant entre l'axe 63 et la roue 65.

On comprend donc immédiatement que l'exemple de système d'assemblage 61 peut s'appliquer à tout type de mobile. De plus, l'axe 63 peut comporter en une seule pièce un pignon afin de former un mobile fini.

Comme illustré à la figure 6, il est possible de fixer un spiral 85 sur un axe 83 de balancier, à l'aide d'un système d'assemblage 81 selon l'invention. Pour ce faire, une partie intermédiaire 87 est montée dans la virole 88 de manière similaire aux explications ci-dessus. La virole 88 comportant une extension 86 formant des spires.

Bien entendu, la présente invention ne se limite pas à l'exemple illustré mais est susceptible de diverses variantes et modifications qui apparaîtront à l'homme de l'art. En particulier, l'ouverture 4 de la pièce 5 ne saurait se limiter à une section circulaire. Ainsi, d'autres formes sont envisageables comme, par exemple, polygonale ou asymétrique.

## Revendications

1. Système d'assemblage (1, 21, 41, 61, 81) d'un organe (3, 23, 43, 63, 83) en un premier matériau dans l'ouverture (4) d'une pièce (5, 25, 65, 85) en un deuxième matériau ne comportant pas de domaine plastique utilisable à l'aide d'une partie intermédiaire (7, 27, 47, 67, 87) en un troisième matériau montée entre ledit organe et ladite pièce, la partie intermédiaire (7, 27, 47, 67, 87) étant agencée pour être reçue contre une portée (11) de la pièce (5, 25, 65, 85) et pour être bloquée latéralement de manière élastique par au moins un dispositif élastique de verrouillage (15) afin de rendre solidaire l'ensemble organe (3, 23, 43, 63, 83) - partie intermédiaire (7, 27, 47, 67, 87) - pièce (5, 25, 65, 85), **caractérisé en ce que** chaque dispositif élastique de verrouillage (15) comporte un bras (17) monté en porte-à-faux d'une base (19) solidaire de la portée (11) de la pièce (5, 25, 65, 85) et **en ce que** la partie intermédiaire (7, 27, 47, 67, 87) comporte, sur son diamètre intérieur au moins un plot (12) permettant de chasser l'organe (3, 23, 43, 63, 83) sur la partie intermédiaire (7, 27, 47, 67, 87) et, sur son diamètre extérieur, au moins un bec (2), chaque dit bec (2) étant situé sur le même rayon qu'un dit plot (12), pour permettre à chaque dispositif élastique de verrouillage (15) de verrouiller élastiquement un dit bec (2) de la partie intermédiaire (7, 27, 47, 67, 87) contre le bras (17) de la pièce (5, 25, 65, 85) par la poussée latérale d'un dit plot (12) de la partie intermédiaire (7, 27, 47, 67, 87) par l'organe (3, 23, 43, 63, 83).

2. Système d'assemblage (1, 21, 41, 61, 81) selon la revendication précédente, **caractérisé en ce que** le bras (17) de chaque dispositif élastique de verrouillage (15) comporte une lame fléchie élastiquement par la partie intermédiaire (7, 27, 47, 67, 87), la lame formant un jour (8) qui coopère avec le bec (2) de la partie intermédiaire (7, 27, 47, 67, 87) afin de solidariser la partie intermédiaire (7, 27, 47, 67, 87) contre la pièce (5, 25, 65, 85).

3. Système d'assemblage (1, 21, 41, 61, 81) selon la revendication précédente, **caractérisé en ce que** le jour (8) est formé par l'extrémité libre (16) de chaque bras (17) faisant face à une autre base (19) en formant une mortaise permettant de coopérer avec un bec (2) formant tenon de la partie intermédiaire (7, 27, 47, 67, 87).

4. Système d'assemblage (1, 21, 41, 61, 81) selon la revendication 2, **caractérisé en ce que** le jour (8) est formé par un évidement dans chaque bras (17) en formant une mortaise permettant de coopérer avec un bec (2) formant tenon de la partie intermédiaire (7, 27, 47, 67, 87).

5. Système d'assemblage (1, 21, 41, 61, 81) selon l'une des revendications précédentes, **caractérisé en ce que** la pièce (5, 25, 65, 85) comporte trois dispositifs élastiques de verrouillage (15).

6. Système d'assemblage (1, 21, 41, 61, 81) selon l'une des revendications précédentes, **caractérisé en ce que** l'organe (3, 23, 43, 63, 83) comporte un axe (9) prolongé par un épaulement (10) permettant de bloquer axialement la pièce (5, 25, 65, 85) et la partie intermédiaire (7, 27, 47, 67, 87) contre l'organe (3, 23, 43, 63, 83).

7. Système d'assemblage (1, 21, 41, 61, 81) selon l'une des revendications précédentes, **caractérisé en ce que** l'ouverture (4) de la pièce (5, 25, 65, 85) comporte une section dont la largeur maximale est comprise entre 0,2 mm et 2 mm.

8. Système d'assemblage (1, 21, 41, 61, 81) selon l'une des revendications précédentes, **caractérisé en ce que** l'ouverture (4) de la pièce (5, 25, 65, 85) comporte une section circulaire.

9. Système d'assemblage (1, 21, 41, 61, 81) selon l'une des revendications 1 à 7, **caractérisé en ce que** l'ouverture (4) de la pièce (5, 25, 65, 85) comporte une section polygonale ou asymétrique.

10. Système d'assemblage (1, 21, 41, 61, 81) selon l'une des revendications précédentes, **caractérisé en ce que** le deuxième matériau est à base de silicium.

11. Système d'assemblage (1, 21, 41, 61, 81) selon l'une des revendications précédentes, **caractérisé en ce que** le troisième matériau est formé à base d'un métal ou d'un alliage métallique.

12. Pièce d'horlogerie **caractérisée en ce qu'**elle comporte au moins un système d'assemblage (1, 21, 41, 61, 81) selon l'une des revendications précédentes.

13. Pièce d'horlogerie selon la revendication précédente, **caractérisée en ce que** la pièce ne comportant pas de domaine plastique utilisable est une roue (65), une ancre (25) ou un spiral (85).

## Patentansprüche

1. System (1, 21, 41, 61, 81) zur Montage eines Organs (3, 23, 43, 63, 83) aus einem ersten Material in der Öffnung (4) eines Elements (5, 25, 65, 85) aus einem zweiten Material, ohne plastischen Bereich verwendbar, mit Hilfe eines Zwischenteils (7, 27, 47, 67, 87) aus einem dritten Material, das zwischen dem Organ und dem Element montiert ist, wobei das Zwischenteil (7, 27, 47, 67, 87) dafür ausgelegt ist, auf einem Gegenlager (11) des Elements (5, 25, 65, 85) aufgenommen und in seitlicher Richtung durch mindestens eine elastische Verriegelungsvorrichtung (15) elastisch verriegelt zu werden, um die Baugruppe Organ (3, 23, 43, 63, 83) - Zwischenteil (7, 27, 47, 67, 87) - Element (5, 25, 65, 85) fest zu verbinden,
**dadurch gekennzeichnet, dass** jede elastische Verriegelungsvorrichtung (15) einen Arm (17) aufweist, der von einer mit dem Gegenlager (11) des Elements (5, 25, 65, 85) fest verbundenen Basis (19) überkragend montiert ist, und dass das Zwischenteil (7, 27, 47, 67, 87) an seinem Innendurchmesser mindestens eine Steckstelle (12) aufweist, die ermöglicht, das Organ (3, 23, 43, 63, 83) auf das Zwischenteil (7, 27, 47, 67, 87) einzutragen, und an seinem Außendurchmesser mindestens eine Nase (2) aufweist, wobei sich jede Nase (2) auf demselben Radius wie die Steckstelle (12) befindet, um jeder elastischen Verriegelungsvorrichtung (15) zu ermöglichen, eine Nase (2) des Zwischenteils (7, 27, 47, 67, 87) an dem Arm (17) des Elements (5, 25, 65, 85) durch den seitlichen Schub einer Steckstelle (12) des Zwischenteils (7, 27, 47, 67, 87) durch das Organ (3, 23, 43, 63, 83) elastisch zu verriegeln.

2. Montagesystem (1, 21, 41, 61, 81) nach dem vorhergehenden Anspruch, **dadurch gekennzeichnet, dass** der Arm (17) jeder elastischen Verriegelungsvorrichtung (15) ein durch das Zwischenteil (7, 27, 47, 67, 87) elastisch gebogenes Blatt aufweist, wobei das Blatt einen Schlitz (8) bildet, der mit der Nase (2) des Zwischenteils (7, 27, 47, 67, 87) zusammenwirkt, um das Zwischenteil (7, 27, 47, 67, 87) an dem Element (5, 25, 65, 85) fest zu machen.

3. Montagesystem (1, 21, 41, 61, 81) nach dem vorhergehenden Anspruch, **dadurch gekennzeichnet, dass** der Schlitz (8) durch das freie Ende (16) jedes Arms (17) gebildet ist, das sich gegenüber einer anderen Basis (19) befindet, indem ein Zapfenloch gebildet wird, das ermöglicht, mit einer Nase (2) zusammenzuwirken, die einen Zapfen des Zwischenteils (7, 27, 47, 67, 87) bildet.

4. Montagesystem (1, 21, 41, 61, 81) nach Anspruch 2, **dadurch gekennzeichnet, dass** der Schlitz (8) durch eine Aussparung in jedem Arm (17) gebildet ist, indem ein Zapfenloch gebildet wird, das ermöglicht, mit einer Nase (2) zusammenzuwirken, die einen Zapfen des Zwischenteils (7, 27, 47, 67, 87) bildet.

5. Montagesystem (1, 21, 41, 61, 81) nach einem der vorhergehenden Ansprüche, **dadurch gekennzeichnet, dass** das Element (5, 25, 65, 85) drei elastische Verriegelungsvorrichtungen (15) umfasst.

6. Montagesystem (1, 21, 41, 61, 81) nach einem der vorhergehenden Ansprüche, **dadurch gekennzeichnet, dass** das Organ (3, 23, 43, 63, 83) eine Achse (9) umfasst, die durch eine Schulter (10) verlängert ist, die ermöglicht, das Element (5, 25, 65, 85) und das Zwischenteil (7, 27, 47, 67, 87) an dem Organ (3, 23, 43, 63, 83) axial festzustellen.

7. Montagesystem (1, 21, 41, 61, 81) nach einem der vorhergehenden Ansprüche, **dadurch gekennzeichnet, dass** die Öffnung (4) des Elements (5, 25, 65, 85) einen Querschnitt besitzt, dessen maximale Breite im Bereich von 0,2 mm bis 2 mm liegt.

8. Montagesystem (1, 21, 41, 61, 81) nach einem der vorhergehenden Ansprüche, **dadurch gekennzeichnet, dass** die Öffnung (4) des Elements (5, 25, 65, 85) einen kreisförmigen Querschnitt besitzt.

9. Montagesystem (1, 21, 41, 61, 81) nach einem der Ansprüche 1 bis 7, **dadurch gekennzeichnet, dass** die Öffnung (4) des Elements (5, 25, 65, 85) einen polygonförmigen oder asymmetrischen Querschnitt besitzt.

10. Montagesystem (1, 21, 41, 61, 81) nach einem der vorhergehenden Ansprüche, **dadurch gekennzeichnet, dass** das zweite Material auf Siliziumbasis hergestellt ist.

11. Montagesystem (1, 21, 41, 61, 81) nach einem der vorhergehenden Ansprüche, **dadurch gekennzeichnet, dass** das dritte Material auf Metallbasis oder Metalllegierungsbasis hergestellt ist.

12. Uhr, **dadurch gekennzeichnet, dass** sie mindestens ein Montagesystem (1, 21, 41, 61, 81) nach einem der vorhergehenden Ansprüche umfasst.

13. Uhr nach dem vorhergehenden Anspruch, **dadurch gekennzeichnet, dass** das Element, ohne plastischen Bereich verwendbar, ein Rad (65), ein Anker (25) oder eine Spirale (85) ist.

## Claims

1. System (1, 21, 41, 61, 81) of assembling a member (3, 23, 43, 63, 83), made of a first material, in the aperture (4) of a part (5, 25, 65, 85) made of a second material having no usable plastic domain, using an intermediate portion (7, 27, 47, 67, 87) made of a third material, mounted between said member and said part, the intermediate portion (7, 27, 47, 67, 87) being arranged to be accommodated against a shoulder (11) of the part (5, 25, 65, 85) and to be laterally locked in a resilient manner by at least one resilient locking device (15) in order to secure together the unit comprising the member (3, 23, 43, 63, 83) - intermediate portion (7, 27, 47, 67, 87) - part (5, 25, 65, 85), **characterized in that** each resilient locking device (15) includes a cantilever arm (17) of a base (19) integral with the shoulder (11) of the part (5, 25, 65, 85), and **in that** the intermediate portion (7, 27, 47, 67, 87) includes, on the internal diameter thereof, at least one stud (12) for driving the member (3, 23, 43, 63, 83) onto the intermediate portion (7, 27, 47, 67, 87) and, on the external diameter thereof, at least one beak (2), each said beak (2) being situated on the same radius as one said stud (12) to allow each resilient locking device (15) to resiliently lock one said beak (2) of the intermediate portion (7, 27, 47, 67, 87) against the arm (17) of the part (5, 25, 65, 85) by the lateral pushing of one said stud (12) of the intermediate portion (7, 27, 47, 67, 87) by the member (3, 23, 43, 63, 83).

2. Assembly system (1, 21, 41, 61, 81) according to the preceding claim, **characterized in that** the arm (17) of each resilient locking device (15) includes a strip, resiliently bent by the intermediate portion (7, 27, 47, 67, 87), the strip forming an opening (8) which cooperates with the beak (2) of the intermediate portion (7, 27, 47, 67, 87) to secure the intermediate portion (7, 27, 47, 67, 87) against the part (5, 25, 65, 85).

3. Assembly system (1,21,41,61,81) according to the preceding claim, **characterized in that** the opening (8) is formed by the free end (16) of each arm (17) facing another base (19) and forming a mortise for cooperating with a beak (2) forming a tenon of the intermediate portion (7, 27, 47, 67, 87).

4. Assembly system (1, 21, 41, 61, 81) according to claim 2, **characterized in that** the opening (8) is formed by a recess in each arm (17) forming a mortise for cooperating with a beak (2) forming a tenon of the intermediate portion (7, 27, 47, 67, 87).

5. Assembly system (1, 21, 41, 61, 81) according to any of the preceding claims, **characterized in that** the part (5, 25, 65, 85) includes three resilient locking devices (15).

6. Assembly system (1, 21, 41, 61, 81) according to any of the preceding claims, **characterized in that** the member (3, 23, 43, 63, 83) includes an arbour (9) extended by a shoulder (10) for axially locking the part (5, 25, 65, 85) and the intermediate portion (7, 27, 47, 67, 87) against the member (3, 23, 43, 63, 83).

7. Assembly system (1, 21, 41, 61, 81) according to any of the preceding claims, **characterized in that** the aperture (4) in the part (5, 25, 65, 85) has a cross-section with a maximum width of between 0.2 mm and 2 mm.

8. Assembly system (1, 21, 41, 61, 81) according to any of the preceding claims, **characterized in that** the aperture (4) in the part (5, 25, 65, 85) has a circular cross-section.

9. Assembly system (1, 21, 41, 61, 81) according to any of claims 1 to 7, **characterized in that** the aperture (4) in the part (5, 25, 65, 85) has a polygonal or asymmetrical cross-section.

10. Assembly system (1, 21, 41, 61, 81) according to any of the preceding claims, **characterized in that** the second material is silicon-based.

11. Assembly system (1, 21, 41, 61, 81) according to any of the preceding claims, **characterized in that** the third material is formed from a metal or metal alloy base.

12. Timepiece **characterized in that** it includes at least one assembly system (1, 21, 41, 61, 81) according to any of the preceding claims.

13. Timepiece according to the preceding claim, **characterized in that** the part with no usable plastic domain is a wheel (65), a pallet lever (25) or a balance spring (85).
